# DEMANDE DE BREVET EUROPEEN

(11) **EP 1 083 310 A1**
(43) Date de publication de la demande: **14.03.2001**
(21) Numéro de dépôt: 00402360.2
(22) Date de dépôt: 25.08.2000
(51) Int. Cl.: F02B 31/08, F02D 9/16, F02M 35/108, F02D 11/08

(54) **Dispositif d'admission variable pour moteur thermique et boisseau pour un tel dispositif**

(30) Priorité: 10.09.1999 FR 9911332
(71) Demandeur: Renault, 92100 Boulogne Billancourt (FR)
(72) Inventeur: Caumont, Pascal, 78120 Rambouillet (FR); Laurent, Patrick, 94800 Villejuif (FR); Dardelet, Guy, 75012 Paris (FR)

(57) **Abrégé**

L'invention propose un dispositif (10) d'alimentation en gaz (G) d'admission d'un moteur thermique, du type dans lequel une culasse (16) du moteur est traversée par au moins deux paires de conduits, primaire (18) et secondaire (20), d'alimentation associées chacune à une chambre (12) de combustion du moteur, et du type dans lequel des extrémités amont (26, 30) des conduits primaires (18) et secondaires (20) débouchent à l'extérieur de la culasse (16), du type qui comporte un bloc (34) d'alimentation extérieur à la culasse (16) qui comporte des premiers tubes (36) d'alimentation des conduits (18) primaires et des seconds tubes (38) d'alimentation des conduits (20) secondaires, et du type dans lequel le bloc (34) d'alimentation comporte des moyens (48) de répartition des gaz (G) entre les premiers tubes (18) et/ou les seconds tubes (20), caractérisé en ce que les moyens (48) de répartition des gaz comportent un boîtier (50) de régulation interposé dans les seconds tubes (38) pour réguler le débit des gaz (G) à l'intérieur de ceux-ci.

## Description

L'invention concerne un dispositif d'alimentation en gaz d'admission pour un moteur thermique, notamment d'un véhicule automobile.

L'invention concerne plus particulièrement un dispositif d'alimentation en gaz d'admission, notamment en air, pour un moteur thermique, notamment d'un véhicule automobile, du type dans lequel au moins deux chambres de combustion du moteur sont délimitées chacune notamment par une paroi d'une culasse du moteur, du type dans lequel la culasse est traversée par au moins deux paires de conduits, primaire et secondaire, d'alimentation associées chacune à une chambre de combustion, du type dans lequel des extrémités aval des conduits primaires et secondaires d'alimentation débouchent dans les chambres de combustion, et du type dans lequel des extrémités amont des conduits primaires et secondaires d'alimentation débouchent dans au moins une face extérieure de la culasse, du type dans lequel le dispositif comporte un bloc d'alimentation qui est fixé extérieurement à la culasse et qui comporte des premiers tubes d'alimentation coïncidant avec les extrémités amont des conduits primaires et des seconds tubes d'alimentation coïncidant avec les deuxièmes extrémités des conduits secondaires, et du type dans lequel le bloc d'alimentation comporte des moyens de répartition des gaz qui permettent d'alimenter sélectivement en gaz les premiers tubes d'alimentation et/ou les seconds tubes d'alimentation.

On connaît de nombreux exemples de dispositifs de ce type.

Selon une première conception, il est connu, pour une chambre de combustion déterminée, de disposer d'un bloc d'alimentation qui débite des gaz d'admission dans des premier et second tubes d'alimentation de la culasse.

Cette configuration correspond à un moteur du type "multisoupapes", c'est à dire un moteur pour lequel le premier tube d'alimentation est relié au conduit primaire qui alimente la chambre de combustion en gaz d'admission par l'intermédiaire d'une première soupape d'admission, et pour lequel le second tube d'alimentation est relié au conduit secondaire qui alimente la chambre de combustion en gaz d'admission par l'intermédiaire d'une seconde soupape d'admission.

Cette configuration présente l'avantage de favoriser le remplissage de la chambre de combustion pour de hauts régimes de fonctionnement du moteur.

Toutefois, on a constaté que pour de régimes réduits de fonctionnement du moteur, par exemple lorsque celui-ci fonctionne à un régime de ralenti, il est préjudiciable d'alimenter la chambre de combustion en gaz d'admission simultanément par l'intermédiaire du conduit primaire et du conduit secondaire.

En effet, pour ces régimes réduits associés à un débit réduit de gaz d'alimentation, les gaz d'alimentation s'écoulent lentement à l'intérieur des premier et second tubes d'alimentation et des conduits primaires et secondaires. Ceci peut être préjudiciable à l'obtention d'un écoulement laminaire de ceux-ci, et donc être nuisible à un écoulement régulier de ces gaz.

Par ailleurs, il est connu de disposer d'un bloc d'alimentation qui débite des gaz d'admission dans au moins tube d'alimentation de la culasse de longueur variable, afin de créer une suralimentation naturelle dépendant de la vitesse des trains d'ondes de gaz d'admission et de la réflexion de ces trains d'ondes de gaz sur les parois du tube considéré.

L'inconvénient principal d'un tel bloc d'alimentation est son coût élevé.

Pour remédier à cet inconvénient, on a imaginé de disposer d'un bloc d'alimentation qui débite sélectivement des gaz d'admission dans l'un ou l'autre d'un premier et second tubes d'alimentation de la culasse, présentant chacun une longueur fixe différente de celle de l'autre tube.

L'inconvénient d'un tel système est que, pour un régime déterminé de fonctionnement du moteur, un seul tube est alimenté à la fois, et par conséquent le remplissage de la chambre de combustion du moteur n'est pas meilleur que celui de la chambre de combustion d'un moteur ne comportant qu'un tube d'alimentation.

De plus, le passage de l'alimentation par un tube à l'alimentation par l'autre tube produit une perturbation de l'écoulement des gaz d'admission.

Enfin, on a proposé dans le document FR-A-2.774.125 de disposer d'un bloc d'alimentation qui débite des gaz d'admission dans un seul tube d'alimentation et un seul conduit d'alimentation associés à une chambre de combustion déterminée, le débit de gaz traversant le tube d'alimentation pouvant être régulé par un boisseau disposé transversalement par rapport au conduit dans un alésage réalisé dans la culasse et apte à se déplacer entre une première position d'obturation du conduit et une seconde position d'ouverture du conduit, sous l'action d'un moyen d'actionnement.

L'inconvénient d'une telle configuration est que, dès lors que le boisseau n'est pas en position de pleine ouverture du conduit, il perturbe l'écoulement des gaz d'admission en créant au sein de la masse gazeuse des gaz d'admission, un écoulement tourbillonnaire local en aval du boisseau, ce qui nuit au remplissage de la chambre de combustion.

Pour remédier à ces inconvénients, l'invention propose un dispositif d'alimentation en gaz permettant une alimentation régulée et exempte de perturbations de la chambre de combustion par l'intermédiaire de deux tubes d'alimentation.

Dans ce but, l'invention propose un dispositif d'alimentation en gaz du type décrit précédemment, caractérisé en ce que les moyens de répartition des gaz comportent un boîtier de régulation des gaz d'admission, qui est interposé dans le trajet des gaz dans les seconds tubes d'alimentation pour réguler le débit des gaz à l'intérieur de ces seconds tubes d'alimentation, entre un débit nul ou réduit et un débit maximal.

Selon d'autres caractéristiques de l'invention :
- le bloc d'alimentation est constitué d'un premier collecteur qui comporte un orifice d'arrivée des gaz et les premier tubes d'alimentation, et d'un second collecteur qui communique avec le premier collecteur et qui comporte le boîtier de régulation des gaz d'admission, monté transversalement par rapport aux seconds tubes d'alimentation,
- le boîtier de régulation comporte un alésage, sensiblement perpendiculaire à l'axe des seconds tubes d'alimentation, à l'intérieur duquel est monté à rotation un boisseau cylindrique qui est d'un diamètre au moins égal au diamètre des seconds tubes d'alimentation qu'il traverse transversalement et qui comporte, perpendiculairement à son axe et en regard de chaque second tube d'alimentation, des perçages parallèles destinés à réguler, par rotation du boisseau, le débit des gaz traversant les seconds tubes d'alimentation,
- les perçages sont d'un diamètre égal au diamètre intérieur des seconds tubes d'alimentation, pour que, en position de débit maximal, le boisseau ne fasse pas obstacle à l'écoulement des gaz à l'intérieur des seconds tubes d'alimentation,
- le boîtier comporte des moyens de commande en rotation du boisseau, entre la position de débit nul ou réduit et la position de débit maximal,
- les moyens de commande en rotation du boisseau comportent un actionneur dont une tige est montée coulissante perpendiculairement par rapport à l'axe de rotation du boisseau, et une extrémité de la tige comporte une lumière oblongue dans laquelle est reçu en coulissement un doigt axial excentré du boisseau,
- la tige de l'actionneur est solidaire d'une paroi mobile d'une capsule à dépression de l'actionneur, dont la pression interne est régulée par une électrovanne commandée par un module électronique de contrôle du moteur,
- l'actionneur est interposé entre deux seconds tubes d'alimentation en regard d'un évidement du boisseau à l'intérieur duquel est agencé le doigt axial excentré du boisseau,
- l'évidement du boisseau comporte deux bras qui s'étendent sensiblement perpendiculairement à l'axe du boisseau, et qui forment chacun une butée à l'encontre d'un pion radial intérieur de l'alésage du boîtier, pour déterminer deux positions extrêmes de rotation du boisseau correspondant aux positions de débit nul ou réduit et de débit maximal du boîtier de régulation,
- le boisseau est réalisé par moulage et comporte au moins une section de jonction en forme de plaque contenant l'axe du boisseau, qui est interposée entre deux tronçons cylindriques percés, pour permettre la flexion du boisseau et faciliter son montage dans l'alésage du boîtier ;
- le boisseau comporte deux sections consécutives en forme de plaque, perpendiculaires l'une par rapport à l'autre, qui sont interposées entre deux tronçons cylindriques percés.

L'invention propose aussi un boisseau pour un dispositif d'alimentation en gaz.

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe, par un plan médian des premiers et seconds tubes d'alimentation, d'un dispositif selon l'invention,
- la figure 2 est une vue en perspective d'un boîtier de régulation des gaz du dispositif de la figure 1,
- la figure 3 est une vue en perspective d'un boisseau cylindrique du boîtier de régulation des gaz de la figure 2,
- les figures 4 et 5 sont des vues d'un actionneur du boisseau cylindrique, en coupe suivant un plan médian de l'actionneur, qui le représentent dans des positions correspondant aux positions de débit nul ou réduit et de débit maximal respectivement du boîtier de régulation,
- la figure 6 est une vue en coupe de l'actionneur des figures 4 et 5 représenté lors d'une opération de contrôle.

Dans la description qui va suivre, des chiffres de référence identiques désignent des pièces identiques ou ayant des fonctions similaires.

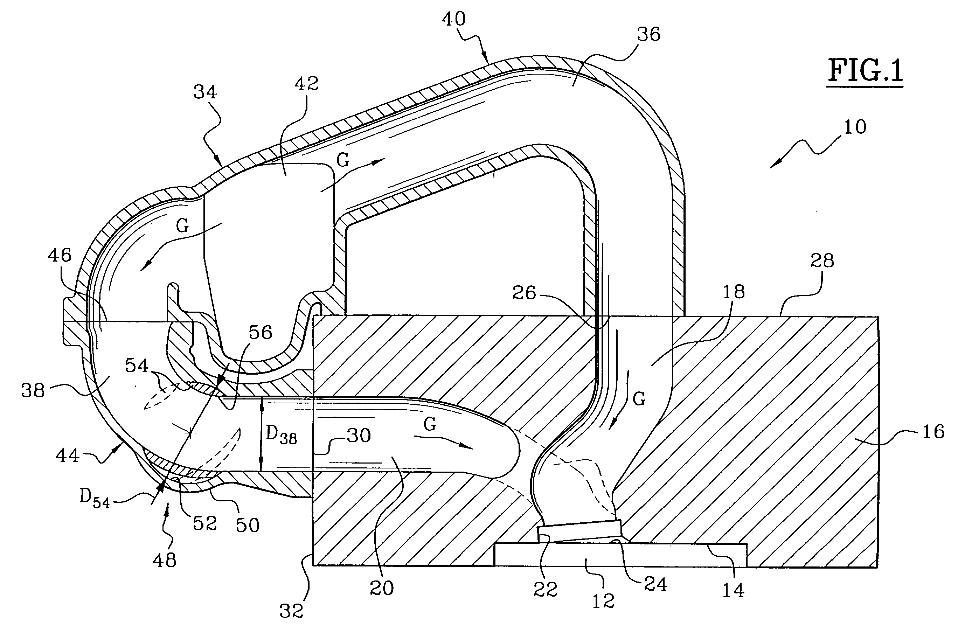

On a représenté à la figure 1 l'ensemble d'un dispositif 10 d'alimentation en gaz G, notamment en air, pour un moteur thermique réalisé conformément à l'invention.

De manière connue, le moteur thermique est par exemple destiné à être monté dans un compartiment moteur d'un véhicule automobile (non représenté) et il comporte au moins deux chambres de combustion 12 qui sont délimitées chacune par une paroi 14 d'une culasse 16 du moteur.

La culasse 14 peut notamment être, comme représentée à la figure 1, une culasse d'un moteur dit "multisoupapes" d'admission comportant, pour chaque chambre de combustion 12, une paire de conduits primaire 18 et secondaire 20 destinés chacun a alimenter en gaz de G la chambre de combustion 12.

À cet effet, une extrémité aval 22 du conduit primaire 18 et une extrémité aval 24 du conduit secondaire 20 débouchent dans la chambre de combustion 12, par exemple par l'intermédiaire de soupapes associées (non représentées).

Par ailleurs, une extrémité amont 26 du conduit primaire 18 débouche dans une face supérieur 28 de la culasse 16 et une extrémité amont 30 du conduit secondaire 20 débouche dans une face latérale 32 de la culasse 16.

Les conduits primaire 18 et secondaire 20 sont alimentés en gaz G par l'intermédiaire d'un bloc 34 d'alimentation qui fixé extérieurement à la culasse 16, notamment et de façon conventionnelle par l'intermédiaire de vis (non représentées).

Le bloc 34 d'alimentation comporte des premier tubes 36 d'alimentation qui coïncident avec les extrémités 26 des conduits 18 primaires d'alimentation, et des seconds tubes 38 d'alimentation qui coïncident avec les extrémités 30 des conduits 20 secondaires d'alimentation.

Avantageusement, le bloc 34 d'alimentation est constitué d'un premier collecteur 40 qui comporte un orifice 42 d'arrivée des gaz G et les premiers tubes 36 d'alimentation, et d'un second collecteur 44 qui communique avec le premier collecteur 40 comporte les seconds tubes 38 d'alimentation.

Le premier collecteur 40 et le second collecteur 44 sont, à titre d'exemple et de façon non limitative de l'invention, réalisés en matériau plastique et assemblés l'un à l'autre par des vis, suivant une surface commune 46 formant plan de joint.

Par ailleurs, de manière connue, le bloc 34 d'alimentation comporte des moyens 48 de répartition des gaz G qui permettent d'alimenter sélectivement en gaz G les premiers tubes 36 d'alimentation et/ou les seconds tubes 38 d'alimentation.

Conformément à l'invention, les moyens 48 de répartition des gaz G comportent un boîtier 50 de régulation des gaz G d'admission qui est interposé dans le trajet des gaz G pour réguler le débit des gaz G à l'intérieur des seconds tubes 38 d'alimentation, entre une position de débit nul ou réduit et une position de débit maximal.

Par ailleurs, conformément à l'invention, le second collecteur 44 comporte le boîtier 50 de régulation des gaz G.

le boîtier 50 de régulation des gaz G est notamment venu de matière avec les seconds tubes 38 d'alimentation, avec lesquels il forme le second collecteur 44.

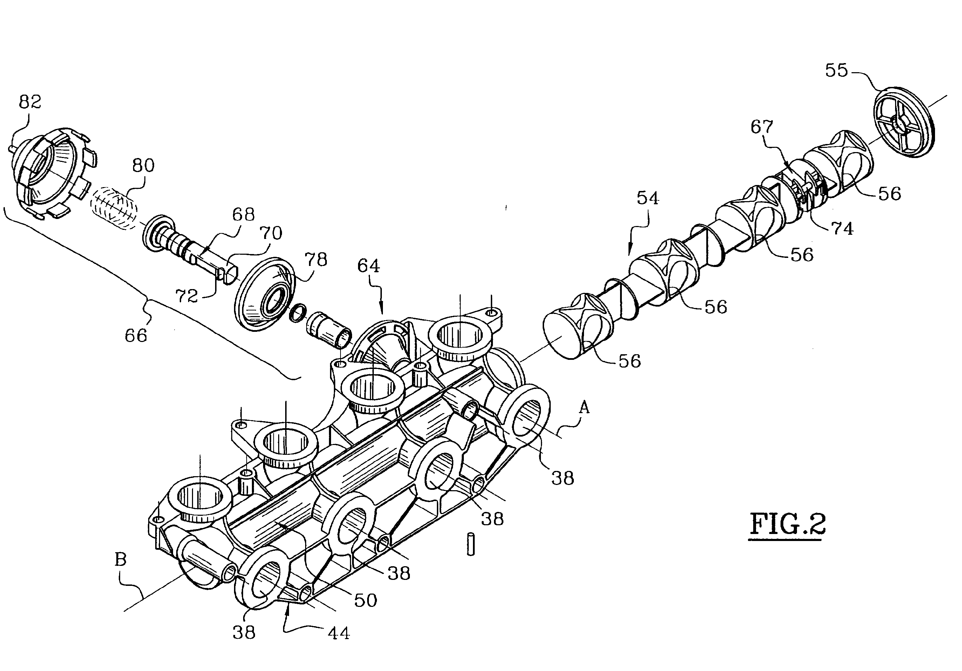

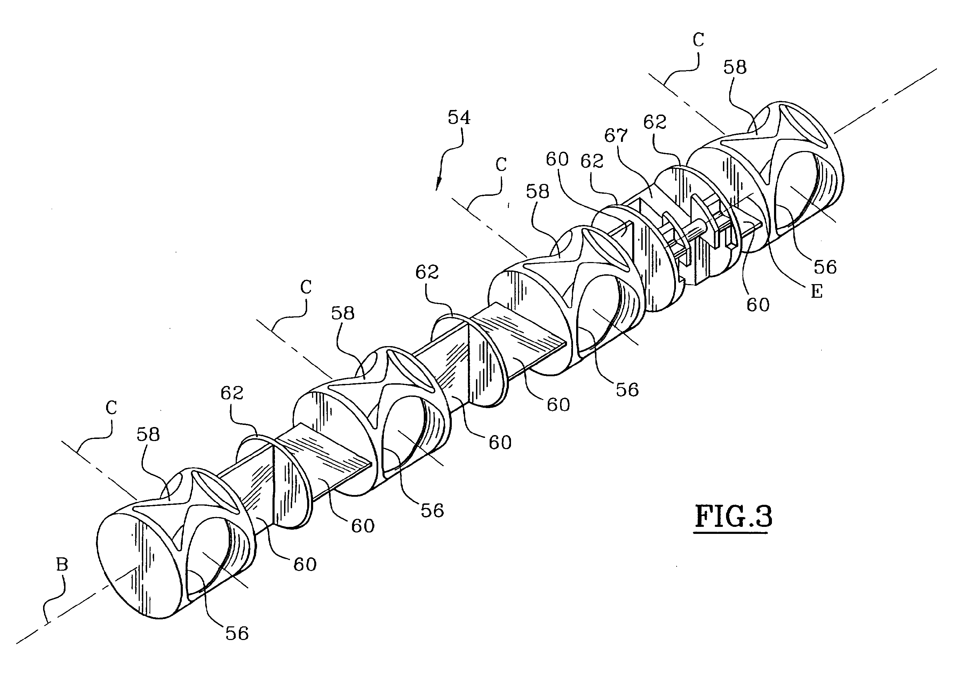

Comme l'illustrent les figures 1 et 2, le boîtier 50 est sensiblement cylindrique et il est agencé transversalement suivant un axe B par rapport à la direction sensiblement longitudinale d'axe A des seconds tubes 38 d'alimentation. Le boîtier 50 comporte un alésage intérieur 52 « conique » pour permettre le démontage, qui est coaxial au boîtier 50, et par conséquent aussi d'axe B, et qui reçoit en rotation un boisseau 54 cylindrique, comme illustré à la figure 2 et plus en détail à la figure 3.

Le boisseau 54 cylindrique est d'un diamètre D₅₄ au moins égal au diamètre D₃₈ des seconds tubes 38 d'alimentation, et il comporte, perpendiculairement à son axe B et en regard de chaque second tube 38 d'alimentation, un perçage ou évidement 56.

Comme l'illustrent les figures 2 et 3, qui représentent un boisseau 54 adapté à un moteur à quatre cylindres en ligne, le boisseau 54 comporte quatre perçages ou évidements 56 d'axes C parallèles qui sont destinés à réguler, par rotation du boisseau 54 le débit des gaz G qui traversent les seconds tubes 38 d'alimentation.

Ainsi, lorsque les perçages ou évidements 56 ont leurs axes C alignés coaxialement avec les seconds tubes 38 d'alimentation, le boisseau 54 détermine la position de débit maximal du boîtier 50 de régulation des gaz G, comme représenté en traits forts à la figure 1.

D'une façon analogue, lorsque les perçages ou évidements 56 ont leurs axes C perpendiculaires aux axes des seconds tubes 38 d'alimentation, le boisseau 54 détermine la position de débit nul ou réduit du boîtier 50 de régulation des gaz G, puisqu'il obture partiellement ou entièrement les seconds tubes 38 d'alimentation, comme représenté en traits pointillés à la figure 1.

Avantageusement, comme l'illustre la figure 3, les axes parallèles C de ces perçages 56 sont sécants avec l'axe B du boisseau 54 et, comme l'illustre la figure 1, les perçages ou évidements 56 sont chacun d'un diamètre égal au diamètre D₃₈ des seconds tubes 38 d'alimentation.

De la sorte, dans la position de débit maximal du boîtier 50 de régulation des gaz G, c'est à dire lorsque les axes C du boisseau 54 sont coaxiaux au seconds tubes 38 d'alimentation, le boisseau 54 ne fait pas obstacle à l'écoulement des gaz G à l'intérieur des seconds tubes 38 d'alimentation, qui peut alors s'effectuer en l'absence totale de turbulences.

Dans le mode de réalisation préféré de l'invention, le boisseau 54 réalisé par moulage d'un matériau plastique et les perçages 56 ou évidements d'axes parallèles résultent du processus de moulage.

Par ailleurs, comme représenté à la figure 3, le boisseau 54 comporte quatre tronçons cylindriques 58 qui comportent les perçages ou évidements 56, et entre lesquels sont interposées des sections 60 de jonction en forme de plaques contenant l'axe B du boisseau 54. Dans le mode de réalisation préféré de l'invention, le boisseau 54 comporte, interposées entre deux tronçons cylindriques 58, deux sections 60 de jonction consécutives qui présentent chacune le forme d'une plaque, qui sont perpendiculaires l'une par rapport à l'autre, et entre lesquelles est interposé un disque 62 intermédiaire de jonction qui est d'un diamètre inférieur au diamètre D₅₄ du boisseau 54.

Cette conception présente l'avantage de proposer un boisseau 54 qui est souple en flexion suivant son axe B, ce qui permet, lors de la fabrication, d'augmenter les tolérances de coaxialité des tronçons cylindriques 58 et la tolérance de cylindricité de l'alésage 52 qui, dans le cas d'un boisseau cylindrique monobloc, seraient nécessaires pour permettre l'introduction et le fonctionnement du boisseau 54 dans l'alésage 56 du boîtier 50.

En effet, le fait que le boisseau 54 soit réalisé en matériau plastique et qu'il comporte des paires de sections 60 agencées entre deux tronçons cylindriques 58 lui confère une souplesse en flexion déterminée qui lui permet d'être reçu dans l'alésage 52 du boîtier 50 avec un jeu qui est suffisamment réduit pour assurer l'étanchéité des parois extérieures des sections 58 cylindriques dans l'alésage 52 et qui est suffisamment élevé pour permettre la rotation du boisseau 54 dans cet alésage 52.

Après montage du boisseau 54 dans l'alésage 52 du boîtier 50, l'alésage 52 est fermé par un bouchon 55 en forme de disque.

Conformément à l'invention, le boîtier 50 comporte des moyens 64 de commande en rotation du boisseau 54, entre la position de débit nul ou réduit et la position de débit maximal.

Comme l'illustre les figures 2, 4 et 5 ces moyens 64 de commande en rotation du boisseau 54 comportent un actionneur 66 dont une tige 68 est montée coulissante suivant un axe D perpendiculaire à l'axe B de rotation du boisseau. Une extrémité 70 de la tige 68 comporte une lumière 72 oblongue dans laquelle est reçu en coulissement un doigt 74 du boisseau 54, d'axe E parallèle et excentré par rapport à l'axe B du boisseau 54, comme représenté à la figure 3.

Avantageusement, l'actionneur 66 est interposé entre deux seconds tubes 38 d'alimentation en regard d'un évidement 67 du boisseau à l'intérieur duquel est agencé le doigt 74 axial excentré du boisseau 54.

Dans le mode de réalisation préféré de l'invention, l'actionneur 66 est un actionneur pneumatique dit "capsule à dépression", qui est commandé par un module électronique (non représenté) de commande du moteur et qui est susceptible d'actionner la tige 68 pour entraîner en rotation le boisseau du fait de la liaison entre la lumière 72 de la tige 68 et le doigt 74 du boisseau.

Cette disposition n'est toutefois pas limitative de l'invention, et l'actionneur 66 pourrait aussi bien être un vérin hydraulique, un vérin électrique à vis, un vérin électromagnétique ou tout autre type d'actionneur.

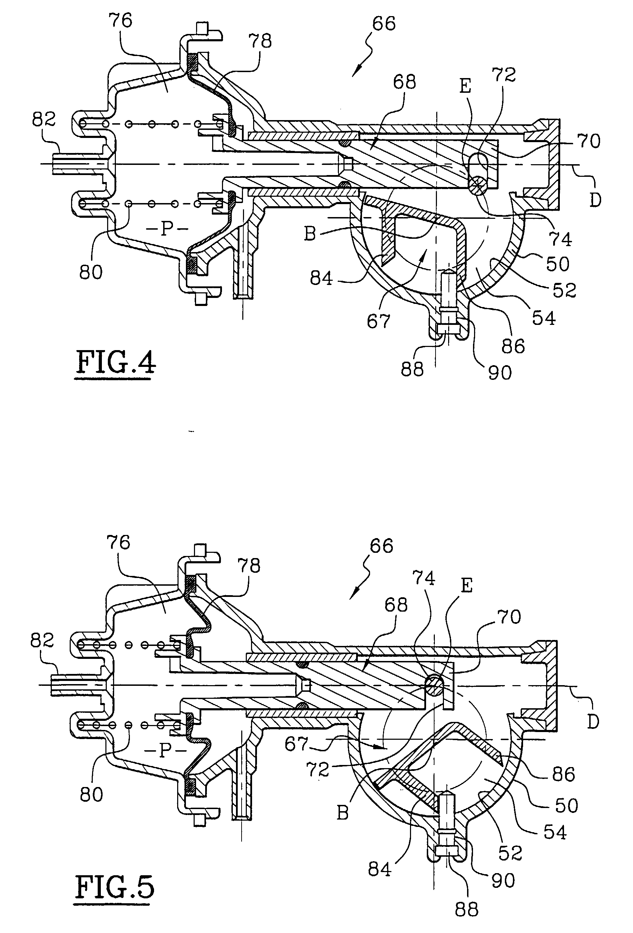

L'actionneur 66 pneumatique comporte une chambre 76 ou "capsule" dont une paroi mobile 78, notamment une membrane, est solidaire en translation de la tige 68. La paroi mobile 78 est rappelée élastiquement par un ressort de rappel 80 vers une position neutre de repos, représentée à la figure 4, pour laquelle le boisseau 54 est pivoté de façon que le boîtier 50 soit en position de débit maximal.

Il règne à l'intérieur de la chambre 76 une pression déterminée "P" qui est régulée par un module électronique (non représenté) de commande du moteur. Par exemple, le module électronique est susceptible de commander l'ouverture ou la fermeture d'une électrovanne qui relie, par l'intermédiaire d'un conduit 82 de dépression de l'actionneur 66 débouchant dans la chambre 76, une pompe à vide du moteur ou une source quelconque de dépression du moteur à la chambre 76.

Par ailleurs, l'évidement 67 du boisseau 54 comporte deux bras 84 et 86 qui s'étendent sensiblement perpendiculairement à l'axe B du boisseau 54, et qui forment chacun une butée à l'encontre d'un pion radial 88 intérieur de l'alésage 52 du boîtier 50, pour déterminer deux positions angulaires extrêmes de rotation du boisseau correspondant aux positions de débit nul ou réduit et de débit maximal du boîtier 50 de régulation.

Avantageusement les bras 84 et 86 sont venus de matière avec le matériau plastique du boisseau 54 et le pion radial 88 intérieur du boîtier 50 est serti dans un alésage radial 90 du boîtier après introduction du boisseau 54 dans l'alésage 52 du boîtier 50.

De la sorte, l'actionneur 66 est susceptible, lors de son coulissement, de déterminer la position de débit maximal du boîtier 50 lorsque le bras 86, entraîné en rotation par le boisseau 54, est en butée contre le pion radial 88 du boîtier 50, comme illustré à la figure 4, la paroi mobile 78 étant en position de repos.

De même; l'actionneur 66 est susceptible, lors de son coulissement, de déterminer la position de débit nul ou réduit du boîtier 50 lorsque le bras 84, entraîné en rotation par le boisseau 54, est en butée contre le pion radial 88 du boîtier 50, comme illustré à la figure 4, la paroi mobile 78 comprimant le ressort 82.

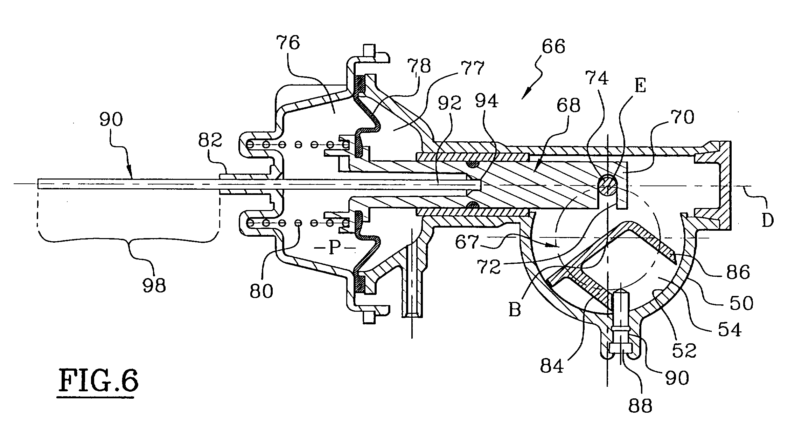

Enfin, la figure 6 illustre une méthode de contrôle de la course de la tige 68 de l'actionneur et de la rotation du boisseau 54.

Le conduit 82 de dépression est coaxial à la direction générale de la tige 68, si bien qu'il est possible d'introduire une pige 90 de contrôle dans ce conduit 82 de dépression.

Il suffit de mesure le déplacement, ou course, de la tige 90, entre une première position dans laquelle la tige 68 est déplacée axialement en position ouverte, c'est-à-dire avec l'extrémité 86 en appui contre la butée 88, et une seconde position où la tige 68 est déplacée axialement en position fermée, c'est-à-dire avec l'extrémité 84 en appui contre la butée 88.

Cette course renseigne directement sur le bon fonctionnement du boisseau. En effet, toute valeur par trop différente de la valeur nominale induit un dysfonctionnement, par exemple une course nulle correspond à un boisseau bloqué.

La première position dite ouverte est la position naturelle de la tige soumise à l'action du ressort 80.

La seconde position dite fermée est obtenue en produisant une pression dans la chambre 77 en utilisant le piquage de mise à l'air libre pour insuffler cette pression.

## Revendications

1. Dispositif (10) d'alimentation en gaz (G) d'admission, notamment en air, pour un moteur thermique, notamment d'un véhicule automobile, du type dans lequel au moins deux chambres (12) de combustion du moteur sont délimitées chacune notamment par une paroi (14) d'une culasse (16) du moteur, du type dans lequel la culasse (16) est traversée par au moins deux paires de conduits, primaire (18) et secondaire (20), d'alimentation associées chacune à une chambre (12) de combustion, du type dans lequel des extrémités (22, 24) aval des conduits primaires (18) et secondaires (20) d'alimentation débouchent dans les chambres (12) de combustion, et du type dans lequel des extrémités amont (26, 30) des conduits primaires (18) et secondaires (20) d'alimentation débouchent dans au moins une face extérieure (28, 32) de la culasse (16), du type dans lequel le dispositif (10) comporte un bloc (34) d'alimentation qui est fixé extérieurement à la culasse (16) et qui comporte des premiers tubes (36) d'alimentation coïncidant avec les extrémités amont (26) des conduits (18) primaires et des seconds tubes (38) d'alimentation coïncidant avec les deuxièmes extrémités (30) des conduits (20) secondaires, et du type dans lequel le bloc (34) d'alimentation comporte des moyens (48) de répartition des gaz (G) qui permettent d'alimenter sélectivement en gaz (G) les premiers tubes (18) d'alimentation et/ou les seconds tubes (20) d'alimentation, et du type dans lequel les moyens (48) de répartition des gaz comportent un boîtier (50) de régulation des gaz (G) d'admission, qui est interposé dans le trajet des gaz (G) dans les seconds tubes (38) d'alimentation pour réguler le débit des gaz (G) à l'intérieur de ces seconds tubes (38) d'alimentation, entre un débit nul ou réduit et un débit maximal,
caractérisé en ce que le bloc (34) d'alimentation est constitué d'un premier collecteur (40) qui comporte un orifice (42) d'arrivée des gaz (G) et les premier tubes (36) d'alimentation, et d'un second collecteur (44) qui communique avec le premier collecteur (40) et qui comporte le boîtier (50) de régulation des gaz (G) d'admission, monté transversalement par rapport aux seconds tubes (38) d'alimentation.

2. Dispositif (10) d'alimentation selon la revendication précédente, caractérisé en ce que le boîtier (50) de régulation comporte un alésage (52), sensiblement perpendiculaire à l'axe des seconds tubes d'alimentation, à l'intérieur duquel est monté à rotation un boisseau (54) cylindrique qui est d'un diamètre (D₅₄) au moins égal au diamètre (D₃₈) des seconds tubes (38) d'alimentation qu'il traverse transversalement et qui comporte, perpendiculairement à son axe (B) et en regard de chaque second tube (38) d'alimentation, des perçages ou évidements (56) parallèles destinés à réguler, par rotation du boisseau (54), le débit des gaz (G) traversant les seconds tubes (38) d'alimentation.

3. Dispositif (10) selon la revendication précédente, caractérisé en ce que les perçages (56) sont d'un diamètre égal au diamètre intérieur (D₃₈) des seconds tubes (38) d'alimentation, pour que, en position de débit maximal, le boisseau (54) ne fasse pas obstacle à l'écoulement des gaz (G) à l'intérieur des seconds tubes (38) d'alimentation.

4. Dispositif (10) selon l'une quelconque des revendications 2 ou 3, caractérisé en ce que le boîtier (50) comporte des moyens (64) de commande en rotation du boisseau (54), entre la position de débit nul ou réduit et la position de débit maximal.

5. Dispositif (10) selon la revendication précédente, caractérisé en ce que les moyens (64) de commande en rotation du boisseau (54) comportent un actionneur (66) dont une tige (68) est montée coulissante perpendiculairement par rapport à l'axe (B) de rotation du boisseau (54), et en ce qu'une extrémité (70) de la tige (68) comporte une lumière (72) oblongue dans laquelle est reçu en coulissement un doigt (74) axial excentré du boisseau (54).

6. Dispositif (10) selon la revendication précédente, caractérisé en ce que la tige (68) de l'actionneur est solidaire d'une paroi mobile (78) d'une capsule à dépression de l'actionneur (66), dont la pression (P) interne est régulée par une électrovanne commandée par un module électronique de contrôle du moteur.

7. Dispositif (10) selon l'une des revendications 5 ou 6, caractérisé en ce que l'actionneur (66) est interposé entre deux seconds tubes (38) d'alimentation en regard d'un évidement (67) du boisseau (54) à l'intérieur duquel est agencé le doigt (74) axial excentré du boisseau (54).

8. Dispositif (10) selon la revendication précédente, caractérisé en ce que l'évidement (67) du boisseau comporte deux bras (84, 86) qui s'étendent sensiblement perpendiculairement à l'axe (B) du boisseau (54), et qui forment chacun une butée à l'encontre d'un pion (88) radial intérieur de l'alésage (52) du boîtier (50), pour déterminer deux positions extrêmes de rotation du boisseau (54) correspondant aux positions de débit nul ou réduit et de débit maximal du boîtier (50) de régulation.

9. Dispositif (10) selon l'une quelconque des revendications 2 à 8, caractérisé en ce que le boisseau (54) est réalisé par moulage et comporte au moins une section (60) de jonction en forme de plaque contenant l'axe (B) du boisseau (54), qui est interposée entre deux tronçons (58) cylindriques percés, pour permettre la flexion du boisseau (54) et faciliter son montage dans l'alésage (52) du boîtier (50).

10. Dispositif (10) selon la revendication 9, caractérisé en ce que le boisseau comporte deux sections consécutives (60) en forme de plaque, perpendiculaires l'une par rapport à l'autre, qui sont interposées entre deux tronçons cylindriques percés (58).

11. Boisseau pour un boîtier de régulation des gaz appartenant à un dispositif d'alimentation en gaz selon l'une quelconque des revendications 2 à 10.
